# EUROPEAN PATENT SPECIFICATION

(11) **EP 1 139 747 B1**
(45) Date of publication and mention of the grant of the patent: **11.06.2003**
(21) Application number: 99957823.0
(22) Date of filing: 15.12.1999
(51) Int. Cl.: A01N 37/36

(54) **Method for controlling fungi**
Verfahren zur Pilzbekämpfung
Methode pour combattre les champignons

(30) Priority: 29.12.1998 US 114347 P
(43) Date of publication of application: 10.10.2001
(73) Proprietor: Ecoval Inc., Elmira, Ontario N3B 1B9 (CA)
(72) Inventor: LOJEK, John, S., Elmira, Ontario N3B 1B9 (CA); LOJEK, Margaret, Anne, Elmira, Ontario N3B 1B9 (CA)
(74) Representative: Müller, Frank Peter, Dipl.-Ing.
(86) International application number: CA9901190
(87) International publication number: WO00038516

(56) References cited:
- EP-A- 0 729 700
- WO-A-93/02555
- WO-A-96/31589
- WO-A-98/18322
- DE-A- 4 030 687
- DATABASE WPI Derwent Publications Ltd., London, GB; AN 1996-283364 XP002134976 DAAICHI SEIMO KK : "Pesticide for brown rot in cultured layer- contains aq soln. of acetic acid and trichloroacetic acid" & JP 08 119806 A

## Description

### Field of the invention

The present invention relates to methods for the treatment of a fungus on edible material and other vegetation as claimed in claims 1 and 4 as well as on the use of an aqueous composition as a sprayable fungicide composition for the treatment of a fungus on edible material and other vegetation as claimed in claims 9 and 12. The composition as used within the claimed methods or for the claimed use has no or minimal herbicidal activities and is especially intended to be used as a fungicide on plants.

### Background of the invention

Synergistic combinations of acetic and citric acids are known for use as a herbicide, as disclosed in US-patents 5,573,997 and 5,705,455. Such compositions consist essentially of acetic acid and citric acid in weight ratios in the range of about 10:1 to about 0,5:1, and with concentrations of acetic acid that are up to about 10 wt.%.

The herbicidal compositions can be formulated to effectively and rapidly kill all vegetative growth, including both normally hard-to-kill weeds and grasses. Alternatively, the herbicidal compositions may be formulated as a selective herbicide, for example, to kill common lawn weeds, leaving the grass unaffected. The herbicidal compositions may also be used as defoliants.

In contrast, fungicidal compositions are required to control the growth of and preferably kill a fungus that infests a plant, without killing the plant. Thus, fungicides are required to have a complete absence of herbicidal activity, or at most only slight herbicidal activity, so that the host plant of the fungus is not killed. If any significant wilting of the plant is observed by the user of the fungicide, then the fungicide may be deemed to be unacceptable. Furthermore, it may be important that the fungicide also exhibit properties such that it may be applied to edible material e.g. vegetables, or be capable of being safely applied to vegetation without risk of harm to animals, including humans.

### Summary of the invention

A method for the treatment of a fungus comprising the step of spraying an effective amount of an aqueous fungicide composition on said fungus and a use of an aqueous composition as a sprayable fungicide composition has now been found that is effective against a variety of types of fungus, with no or minimal herbicidal properties. The fungicidal compositions are capable of being applied to edible material and other vegetation without risk of harm to animals, including humans.

Furthermore, the fungicidal compositions are friendly to the environment.

Accordingly, one aspect of the present invention provides a method for the treatment of a fungus with an aqueous composition comprising acetic acid and citric acid in combination with a surfactant which is an anionic/non-ionic surfactant blend, said composition being effective as a fungicide.

An aqueous fungicidal composition of acetic and citric acids in combination with said surfactant blend used within the claimed method is more effective as a fungicide than either acetic acid or citric acid at the same concentration.

In a preferred embodiment of the invention the concentration of acetic acid and citric acid with surfactant blend is such that the composition does not exhibit herbicidal properties on cucumbers or tomatoes.

A further aspect of the present invention provides a method of treatment of fungus with an aqueous fungicidal composition of acetic acid and citric acid in combination with surfactant blend, the ratio of acetic acid to citric acid being in the range of 10:1 to 1:1 on a weight basis, preferably in the range of 4:1 to 1:1 on a weight basis, the concentration of acetic acid being less than 8 g/l and the amount of surfactant on a weight basis being at least equal to the amount of citric acid.

Another aspect provides for use of aqueous fungicide compositions defined herein for treatment of fungus on vegetables, especially tomatoes and cucumbers, on flowering plants and on trees. In particular, the fungus to be treated is mildew.

In another aspect, the present invention provides an aqueous composition comprising an anionic/non-ionic surfactant, propylene glycol and citric acid optionally with acetic acid.

A preferred method of the present invention for the treatment of a fungus on a vegetable, flowering plant or tree comprising the steps of preparing an aqueous fungicide composition described herein and applying an effective amount of said aqueous composition to said fungus.

### Detailed Description of the Invention

One aspect of the present invention relates to methods for the treatment of a fungus and use of aqueous fungicidal compositions of acetic and citric acid in combination with an anionic/non-ionic surfactant blend. The combination of acetic and citric acids with an anionic/non-ionic surfactant blend exhibits synergistic effects as a fungicide, with the resulting composition being more effective as a fungicide than a corresponding composition of acetic acid, citric acid or surfactant alone at the same concentration or a combination of only two of acetic acid, citric acid and surfactant. In addition, the fungicidal composition may be formulated such that the concentration of acetic and citric acids is such that the composition does not exhibit herbicidal properties with respect to a particular plant, especially herbicidal properties with respect to cucumbers, tomatoes, cabbage, roses and peppers, broad leaf plants and/or other vegetation.

The composition of the invention comprises a synergistic combination of acetic acid and citric acid, with surfactant, in aqueous solution. The acetic acid component is conveniently provided by domestic white vinegar while the citric acid is conveniently provided by lemon juice or juices of other citrus fruits. It is understood, however, that industrial sources of either or both of these components may be used. For instance, the composition may be formulated using glacial acetic acid.

The weight ratio of acetic acid to citric acid in the fungicidal composition may vary over a wide range, for instance, in the range of from about 10:1 to about 1:1, preferably in the range of 4:1 to 1:1, on a weight basis. In embodiments, the weight ratio of acetic acid to citric acid is in the range of 4:1 to about 2:1.

The fungicidal composition in use may contain up to 100 g/l of acetic acid and 50 g/l of citric acid, with the preferred amount of acetic acid being up to 10g/l and especially up to 4 g/l. The composition should contain at least 1 g/l of acetic acid and 0.5 g/l of citric acid. Preferred compositions contain about 4 g/l of acetic acid and 2 g/l of citric acid.

The fungicidal activity requires the combination of acetic acid and citric acid with an anionic/non-ionic surfactant blend. The amount of surfactant should be at least equal to the amount of citric acid.

It is believed that a wide variety of surfactants may be used. However, as exemplified herein, it is known that some surfactants exhibit herbicidal activity when used alone and such surfactants should not be used in the compositions of the invention.

A particularly preferred composition contains acetic acid, citric acid and a surfactant available as Sponto™ 300T. This surfactant is understood to be a blend of anionic and non-ionic surfactants. Other surfactants may be used. The amount of surfactant should be in the range of 0.1-40 g/l, preferably 1-5 g/l.

The fungicidal composition may be formulated so as to be effective on one or more of a variety of fungus. In particular, the composition may be used in the treatment of powdery mildew. The composition may be used on a variety of plants, including vegetables and flowering plants, as well as on trees.

The present invention is illustrated by the following examples.

### EXAMPLE I

### Materials and Methods:

**Tomatoes:** Mature greenhouse tomatoes of the variety Cobra were allowed to develop powdery mildew infection on their own. Once several spots per leaflet were present and spreading, the whole leaflet was sprayed with a fine mist. Since powdery mildew grows mostly on top of the leaf surface, no attempt was made to cover bottom portion. Each experiment was duplicated four times, and average numbers are present in Table 1.
**Cucumbers:** Young cucumber plants of the variety Straight 8 were planted in 4 inch plastic pots using a standard peat based mixture. The young plants were observed for powdery mildew symptoms on the cotyledons. Once infection became visible, it was allowed to spread until a majority of the cotyledon surface was diseased. Each experiment consisted of four replications and average numbers for control as well as plant damage are given in Table 2.

All concentrations are in g/l.

The results obtained were as follows:

**Table 1**

| **Powdery Mildew Control on Mature Tomato Leaves** | |
|---|---|
| Sample Solution* | 7 Days Post Spraying |
| 1 (comparative) Water | 0.0 |
| 2 (comparative) 4 g aa + 2 g ca | 3.5 |
| 3 (comparative) 8 g aa + 4 g ca | 6.0 |
| 4 (comparative) 16 g aa + 4 g ca | 9.5 |
| 5 (comparative) 4 g aa | 0.0 |
| 6 (comparative) 8 g aa | 0.0 |
| 7 4 g aa + 2 g ca + 10 g Sponto | 7.5 - no new infection 14 days post spray |
| 8 (comparative) 4 g aa + 10 g Sponto | 6.25 - no new infection 14 days post spray |
| 9 (" ") 2 g ca + 10 g Sponto | 7.5 - no new infection 14 days post spray |
| 10 (" ") 10 g Sponto | 7.25 - no new infection 14 days post spray |
| 11 (" ") 8 g aa | 3.75 |
| 12 (" ") 16 g aa | 4.25 - leaf damage wilted |
| 13 (" ") 4 g ca | 1.0 |
| 14 (" ") 8 g ca | 0.5 |
| 15 (" ") 5 g Sponto | 4.5 - no leaf damage |
| 16 (" ") 5 g SN-90 | 7.0 - leaf damage wilted, dying |
| 17 (" ") 10 g SN-90 | 8.25 - leaf damage wilted, dying |
| 18 (" ") 4 g aa + 2 g ca + 10 g SN-90 | 9.25 -wilted leaves, severe damage on fruit |
| 19 (comparative) 4 g aa + 2 g ca + 5 g SN-90 | 5.75 - no leaf damage, no fruit damage |
| 20 4 g aa + 2 g ca + 10 g Sponto | 7.5- no leaf damage, no fruit damage |
| Notes: | |
| aa = acetic acid | |
| ca = citric acid | |
| Sponto = Sponto™ 300T from Witco, an anionic/ no-ionic surfactant blend | |
| SN-90 = Witconol SN-90 from Witco, an ethoxylated alcohol | |
| 0.0 indicates no control | |
| 10.0 indicates 100% control | |

**Table 2**

| **Powdery Mildew Control on Cucumbers** | | | |
|---|---|---|---|
| Sample | Solution* | Cotyledons 7 days Post Spraying | Leaf Damage (%) |
| 1 ∗ | 4 g aa | 0.0 | 0.0 |
| 2 ∗ | 8gaa | 0.0 | 3.25 |
| 3 ∗ | 16 g aa | 0.0 | 75.0 |
| 4 ∗ | 2 g ca | 0.0 | 0.0 |
| 5 ∗ | 4gca | 0.0 | 0.0 |
| 6 ∗ | 8gca | 0.0 | 0.0 |
| 7 ∗ | 4 g aa + 2 g ca | 0.0 | 7.5 |
| 8 ∗ | 8 g aa + 4 g ca | 0.0 | 17.5 |
| 9 ∗ | 16 g aa + 8 g ca | 3.0 | 93.75 |
| 10 ∗ | 5 g Sponto | 0.0 | 0.0 |
| 11 ∗ | 10 g Sponto | 0.0 | 0.0 |
| 12 ∗ | 5 g SN-90 | 0.0 | 43.75 |
| 13 ∗ | 10 g SN-90 | 7.5 | 73.75 |
| 14 | 4 g aa + 2 g ca + 5 g Sponto | 3.0 | 1.25 |
| 15 | 4 g aa + 2 g ca + 10 g Sponto | 7.5 | 5.5 |
| 16 ∗ | 4 g aa + 2 g ca + 10 g SN-90 | 10.0 | 88.75 |
| 17 ∗ | 4 g aa + 10 g Sponto | 3.0 | 2.5 |
| 18 ∗ | Water | 0.0 | 0.0 |
| *Notes: aa = acetic acid ca = citric acid Sponto = Sponto™ 300T from Witco, an anionic/non-ionic surfactant blend SN-90 = Witconol SN-90 from Witco, an ethoxylated alcohol 0.0 indicates no control 10.0 indicates 100% control | | | |

| | | | |
|---|---|---|---|
| ∗ (comparative) | | | |

Leaf damage of 10% or lower is preferred. This usually occurs as leaf curling or leaf tip burn on older leaves but not on new ones.

The results clearly indicated that low rates of acetic or citric acid are ineffective as fungicides. Moreover, the toxicity of acetic acid to leaves increases substantially as its concentration increases. This is not evident using citric acid alone.

It is also evident that the plant toxicity of combinations of acetic acid and citric acid at the highest rates tested is higher than for the individual acids. The highest rates of acetic and citric acids also show synergistic control of powdery mildew compared to the highest rates of those acids when used alone, which show zero control.

When two surfactants were tested alone in control of the fungus at 10 g/litre, Sponto 300T showed no disease control whereas SN-90 at the same rate showed good powdery mildew control. However, even at a 5 g/litre rate, SN-90 is too phytotoxic to be suitable for plant application.

Combinations of acetic and citric acid with Sponto 300T surfactant showed good fungicidal action with minimal herbicidal action.

### EXAMPLE II

The procedure of Example I was repeated on perennial pea, which is a flowering plant.

The composition used was 3 g citric acid + 5 g Sponto 300T + 5 g propylene glycol, the concentrations being in g/l.

It was found that there was 100% control of powdery mildew, with no damage to leaves.

## Claims

1. A method for the treatment of a fungus on edible material and other vegetation comprising the step of spraying an effective amount of an aqueous fungicide composition on said fungus, said aqueous composition comprising acetic acid and citric acid in combination with an anionic/non-ionic surfactant blend, the ratio of acetic acid to citric acid being in the range of 10:1 to 1:1 on a weight basis and the concentration of acetic acid being less than 8 g/l.

2. The method for the treatment of a fungus of claim 1 in which the ratio is in the range of 4:1 to 1:1 on a weight basis.

3. The method for treatment of a fungus of claim 1 or claim 2 in which the surfactant is Sponto™ 300T surfactant.

4. A method for the treatment of a fungus on edible material and other vegetation comprising the step of spraying an effective amount of an aqueous fungicide composition on said fungus, said composition comprising of an anionic/non-ionic surfactant blend, citric acid and propylene glycol.

5. The method as claimed in claim 4,
**characterized in that**
said fungicide further comprises acetic acid.

6. The method as claimed in claim 4 or 5,
**characterized in that**
said surfactant blend is Sponto™ 300T surfactant.

7. The method as claimed in one of the preceding claims,
**characterized in that**
said fungus is mildew.

8. The method as claimed in one of the preceding claims,
**characterized in that**
said fungus is on a vegetable, flowering plant or tree.

9. Use of an aqueous composition comprising acetic acid and citric acid, in combination with an anionic/non-ionic surfactant blend as a sprayable fungicide composition for the treatment of a fungus on edible material and other vegetation, the ratio of acetic acid to citric acid being in the range of 10:1 to 1:1 on a weight basis and the concentration of acetic acid being less than 8 g/l.

10. The use as claimed in claim 9,
**characterized in that**
said ratio is in the range of 4:1 to 1:1 on a weight basis.

11. The use as claimed in claims 9 or 10,
**characterized in that**
said surfactant blend is Sponto™ 300T surfactant.

12. Use of an aqueous composition comprising citric acid, propylene glycol and an anionic/non-ionic surfactant blend as a sprayable fungicide composition for the treatment of a fungus on edible material and other vegetation.

13. The use of claim 12,
**characterized in that**
said fungicide composition further comprises acetic acid.

14. The use as claimed in claims 12 or 13,
**characterized in that**
said surfactant blend is Sponto™ 300T surfactant.

15. The use as claimed in one of the preceding claims 9 to 14,
**characterized in that**
said fungicide composition is used on fungus on a vegetable, flowering plant or tree, especially on cucumbers or tomatoes.

## Patentansprüche

1. Verfahren zur Behandlung eines Pilzes auf essbarem Material oder anderen Pflanzen, aufweisend den Schritt des Aufsprühens einer effektiven Menge einer wässrigen Fungizidzusammensetzung auf den Pilz, wobei die wässrige Zusammensetzung Essigsäure und Zitronensäure in Kombination mit einer anionischen/nicht-ionischen Tensidmischung aufweist, wobei das Verhältnis von Essigsäure zu Zitronensäure im Bereich von 10:1 bis 1:1 auf Gewichtsbasis ist und die Konzentration von Essigsäure weniger als 8 g/l ist.

2. Verfahren zur Behandlung eines Pilzes nach Anspruch 1, bei dem das Verhältnis im Bereich von 4:1 bis 1:1 auf Gewichtsbasis ist.

3. Verfahren zur Behandlung eines Pilzes nach Anspruch 1 oder 2, bei dem das Tensid Sponto™ 300T-Tensid ist.

4. Verfahren zur Behandlung eines Pilzes auf essbarem Material oder anderen Pflanzen aufweisend den Schritt des Aufsprühens einer effektiven Menge einer wässrigen Fungizidzusammensetzung auf den Pilz, wobei die Zusammensetzung eine anionische/nicht-ionische Tensidmischung, Zitronensäure und Propylenglykol aufweist.

5. Verfahren nach Anspruch 4,
**dadurch gekennzeichnet, dass**
das Fungizid außerdem Essigsäure enthält.

6. Verfahren nach Anspruch 4 oder 5,
**dadurch gekennzeichnet, dass**
die Tensidmischung Sponto™ 300T-Tensid ist.

7. Verfahren nach einem der voranstehenden Ansprüche,
**dadurch gekennzeichnet, dass**
der Pilz Schimmel bzw. Mehltau ist.

8. Verfahren nach einem der voranstehenden Ansprüche,
**dadurch gekennzeichnet, dass**
der Pilz auf Gemüse, blühenden Pflanzen oder Bäumen ist.

9. Benutzung einer wässrigen Lösung, die Essigsäure und Zitronensäure aufweist, in Kombination mit einer anionischen/nicht-ionischen Tensidmischung als aufsprühbare Fungizidzusammensetzung für die Behandlung eines Pilzes auf essbarem Material oder anderen Pflanzen, wobei das Verhältnis von Essigsäure zu Zitronensäure im Bereich von 10:1 bis 1:1 auf Gewichtsbasis ist und die Konzentration von Essigsäure weniger als 8 g/l ist.

10. Benutzung nach Anspruch 9,
**dadurch gekennzeichnet, dass**
das Verhältnis im Bereich von 4:1 bis 1:1 auf Gewichtsbasis ist.

11. Benutzung nach Anspruch 9 oder 10,
**dadurch gekennzeichnet,**
**dass** die Tensidmischung Sponto™ 300T-Tensid ist.

12. Benutzung einer wässrigen Zusammensetzung, die Essigsäure, Propylenglykol und eine anionische/nicht-ionische Tensidmischung aufweist, als aufsprühbare Fungizidzusammensetzung für die Behandlung eines Pilzes auf essbarem Material oder anderen Pflanzen.

13. Benutzung nach Anspruch 12,
**dadurch gekennzeichnet, dass**
die Fungizidzusammensetzung außerdem Essigsäure enthält.

14. Benutzung nach Anspruch 12 oder 13,
**dadurch gekennzeichnet, dass**
die Tensidmischung Sponto™ 300T-Tensid ist.

15. Benutzung nach einem der voranstehenden Ansprüche 9 bis 14,
**dadurch gekennzeichnet, dass**
die Fungizidzusammensetzung für einen Pilz auf Gemüse, blühenden Pflanzen oder Bäumen, insbesondere auf Gurken und Tomaten, verwendet wird.

## Revendications

1. Méthode pour lutter contre un champignon sur une matière comestible et autres végétaux comprenant l'étape de pulvérisation d'une quantité efficace d'une composition aqueuse fongicide sur ledit champignon, ladite composition aqueuse comprenant de l'acide acétique et de l'acide citrique en association avec un mélange de tensioactifs anionique/non-ionique, le rapport de l'acide acétique à l'acide citrique étant dans l'intervalle de 10:1 à 1:1, sur une base pondérale, et la concentration de l'acide acétique étant inférieure à 8 g/l.

2. Méthode pour lutter contre un champignon selon la revendication 1, dans laquelle le rapport est dans l'intervalle de 4:1 à 1:1, sur une base pondérale.

3. Méthode pour lutter contre un champignon selon la revendication 1 ou la revendication 2, dans laquelle le tensioactif est le tensioactif Sponto™300T.

4. Méthode pour lutter contre un champignon sur une matière comestible et autres végétaux comprenant l'étape de pulvérisation d'une quantité efficace d'une composition aqueuse fongicide sur ledit champignon, ladite composition comprenant un mélange de tensioactifs anionique/non-ionique, de l'acide citrique et du propylèneglycol.

5. Méthode selon la revendication 4, **caractérisée en ce que** ledit fongicide comprend en outre de l'acide acétique.

6. Méthode selon la revendication 4 ou 5, **caractérisée en ce que** ledit mélange de tensioactifs est le tensioactif Sponto™300T.

7. Méthode selon l'une quelconque des revendications précédentes, **caractérisée en ce que** ledit champignon est une moisissure.

8. Méthode selon l'une quelconque des revendications précédentes, **caractérisée en ce que** ledit champignon est sur un légume, une plante fleurie ou un arbre.

9. Utilisation d'une composition aqueuse comprenant de l'acide acétique et de l'acide citrique en association avec un mélange de tensioactifs anionique/non-ionique en tant que composition fongicide pouvant être pulvérisée pour lutter contre un champignon sur une matière comestible et autres végétaux, le rapport de l'acide acétique à l'acide citrique étant dans l'intervalle de 10:1 à 1:1, sur une base pondérale, et la concentration de l'acide acétique étant inférieure à 8 g/l.

10. Utilisation selon la revendication 9, **caractérisée en ce que** ledit rapport est dans l'intervalle de 4:1 à 1:1, sur une base pondérale.

11. Utilisation selon les revendications 9 ou 10, **caractérisée en ce que** ledit mélange de tensioactifs est le tensioactif Sponto™300T.

12. Utilisation d'une composition aqueuse comprenant de l'acide citrique, du propylèneglycol et un mélange de tensioactifs anionique/non-ionique en tant que composition fongicide pouvant être pulvérisée pour lutter contre un champignon sur une matière comestible et autres végétaux.

13. Utilisation selon la revendication 12, **caractérisée en ce que** ladite composition fongicide comprend en outre de l'acide acétique.

14. Utilisation selon les revendications 12 ou 13, **caractérisée en ce que** ledit mélange de tensioactifs est le tensioactif Sponto™300T.

15. Utilisation selon l'une quelconque des revendications précédentes 9 à 14, **caractérisée en ce que** ladite composition fongicide est utilisée sur un champignon sur un légume, une plante fleurie ou un arbre, en particulier sur des concombres ou des tomates.
